# EUROPEAN PATENT SPECIFICATION

(11) **EP 2 218 937 B1**
(45) Date of publication and mention of the grant of the patent: **21.12.2011**
(21) Application number: 09002010.8
(22) Date of filing: 13.02.2009
(51) Int. Cl.: F16F 9/54, E05F 1/12, F16F 7/00, F16F 13/00, F16F 1/12

(54) **Spring and damper system**
Feder/Dämpfer System
Système de ressort et d'amortisseur

(43) Date of publication of application: 18.08.2010
(73) Proprietor: Electrolux Home Products Corporation N.V., 1130 Brussels (BE)
(72) Inventor: Mirshekari, Behnam, 30539 Hannover (DE); Wälzlein, Klaus, 91126 Schwabach (DE); Herrlen, Marco, 91608 Geslau (DE)
(74) Representative: Baumgartl, Gerhard Willi

(56) References cited:
- DE-B3- 10 343 928
- DE-U1-202007 007 450
- US-B1- 6 397 836

## Description

### TECHNICAL FIELD

The present invention relates to a spring system comprising an elongate spring having a predetermined spring force and an elongate damper having a predetermined damping force, whereas the damping force counteracts the spring force and is smaller than the spring force. Moreover, the present invention relates to an opening- and/or closing device for opening and/or closing doors, whereas the opening- and/or closing device comprises at least one of such spring systems.

### BACKGROUND TECHNOLOGY

Spring systems of the above-mentioned kind are already known in several different designs. For example, such spring systems may be used to provide a closing device for automatically closing doors of domestic appliances, such as doors of ovens, dishwashers, etc., or for automatically closing drawers of a closet. In these cases, the spring of the spring system generates a predetermined closing force for closing the door or drawer in the entirely closed state. In order to receive a slower and smoother closing movement, the damper is provided, whose damping force counteracts the spring force in order to decelerate the closing movement.

One example of a closing device is disclosed in DE 20 2007 007 450 U1, whereas the closing device serves for closing a drawer-like door of a domestic oven. The oven comprises a cabinet defining an oven cavity with a charging opening for charging the oven cavity with food stuff to be cooked; a drawer-like door for optionally opening and closing said charging opening in a substantially horizontal direction; and a sealing gasket arranged between the door and the oven cavity. The door is fixed to sliding bars, which slide in guiding rails in order to realize the horizontal opening and closing movement of the door. A closing device generating a closing force for closing the door is arranged at the guiding rails, which cooperates with the sliding bars. This closing device comprises a spring system having springs, which are fixed to the rearmost portions of the guiding rails. These spring elements draw the slide bars at the end of the closing movement towards the backwall of the cabinet in order to press the inner wall of the door with a predetermined closing force against the sealing gasket, which is arranged around the charging opening of the cabinet. To ensure a smooth closing of the door, the cooking oven further comprises a damper, which counteracts the closing force of the closing device. This damper is arranged between the vertically extending front plate of the door and the cabinet. Accordingly, document DE 20 2007 007 450 U1 describes an oven with a closing device, which comprises a spring system providing a damped predetermined closing force. However, the installation work for installing the springs and the damper is very complex and thus expensive, because the springs and the damper are arranged at different locations of the oven and have to be installed separately from each other.

Another spring system is known from DE 10 343 928 B3, on which the pre-characterising part of claim 1 is based; a further, similar spring system is also known from US 6,397,836 B1, wherein the damper is arranged at least partly within the helical spring.

Starting from the above mentioned prior art technology it is an object of the present invention to provide a spring system as well as an opening- and/or closing device comprising at least one of such spring systems, which do not need much installation space and are easy and inexpensive to install.

### DISCLOSURE OF THE INVENTION

This object is solved by providing a spring system according to claim 1 and an opening- and/or closing device for opening and/or closing doors according to claim 4. The dependent claims refer to individual embodiments of the present invention.

The present invention provides a spring system comprising an elongate spring having a predetermined spring force and an elongate damper having a predetermined damping force, whereas the damping force counteracts the spring force and is smaller than the spring force. According to the invention, the damper is arranged within the spring or vice versa in order to save installation space compared to arrangements in which the damper and the spring are arranged in alignment or parallel to each other or in completely different locations. Moreover, the damper is coupled to the spring in such a manner that the damper and the spring form a single unit, which can independently be handled by a user and can be installed as a whole. Accordingly, the spring system according to the present invention is easy, rapidly and thus inexpensively to install. Furthermore, the spring is formed as a helical spring, because such a helical spring defines an internal space for receiving the damper, whereby the damper is coupled to the spring by a positive locking. In order to realise such a positive locking the damper according to the invention is arranged within a helical spring and is provided with bolts, which are arranged transversely with respect to a longitudinal axis of the damper, and are accommodated within eyelets of the spring whereby the bolts are made integral with the damper. Thus, the number of components can be reduced. This arrangement leads to a very simple structure of the spring system, which is easy to assemble and disassemble.

Preferably, the damper is a hydraulic damper.

Furthermore, the spring and/or the damper preferably comprises fixing means, e.g. fixing lugs or the like. Such fixing means serve for fixing the spring system to other components, such as to a stationary component and to a movable component.

Moreover, the present invention provides an opening- and/or closing device for opening and/or closing doors, whereas the device comprises at least one spring system of the above-mentioned kind.

### BRIEF DESCRIPTION OF THE ACCOMPANYING DRAWINGS

The detailed configuration, features and advantages of the present invention will become apparent in the course of the following description with reference to the accompanying drawings.
Figure 1 is a perspective view showing a spring system according to an embodiment of the present invention;
Figure 2 is a side view of the spring system shown in figure 1; and
Figure 3 is a side view showing a part of a domestic oven having a closing device comprising the spring system shown in figures 1 and 2.

### BEST MODE FOR CARRYING OUT THE INVENTION

Below, one embodiment of the present invention will be described with reference to the figures. In the figures, like parts or portions are denoted by like reference numerals, and redundant description will be omitted.

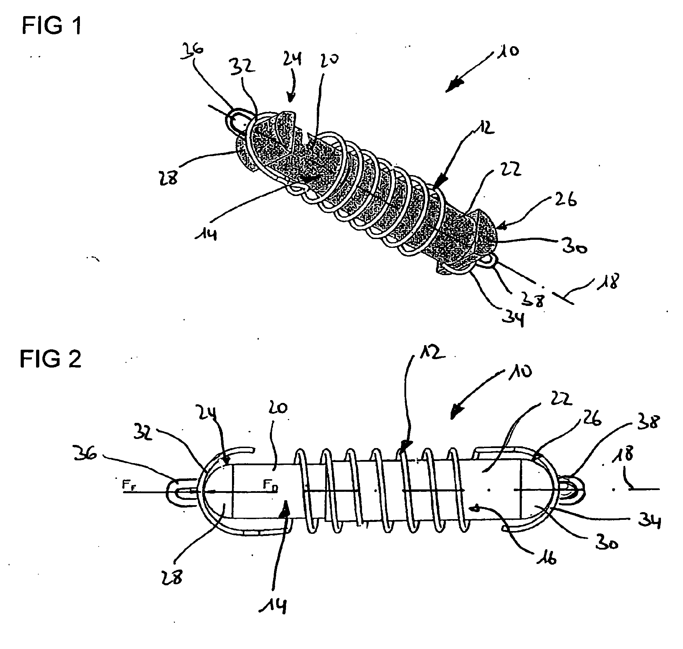

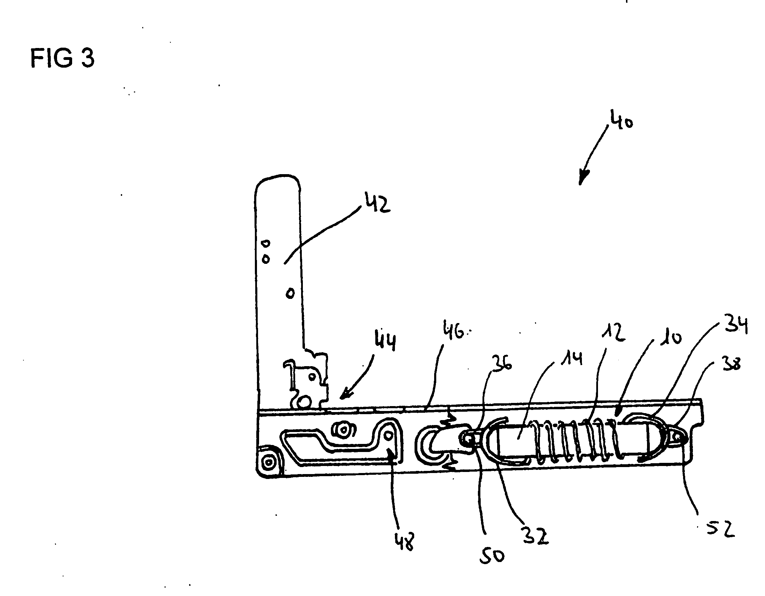

Figures 1 and 2 show a spring system 10 according to an embodiment of the present invention. The spring system 10 comprises an elongate helical spring 12 having a predetermined spring force F_{F} and an elongate hydraulic damper 14 having a predetermined damping force F_{D}, whereas the damping force F_{D} counteracts the spring force F_{F} and is smaller than the spring force F_{F}. The hydraulic damper 14 is arranged within the internal space 16 defined by the helical spring 12, such that the helical spring 12 as well as the hydraulic damper 14 extend in the same direction defined by the longitudinal axis 18. The hydraulic damper 14 comprises two elongate damper elements 20 and 22, whereas the damper element 20 is inserted in and guided by the damper element 22. Both damper elements 20 and 22 are provided at their respective free ends 24 and 26 with bolts 28 and 30, which are arranged transversely with respect to the longitudinal axis 18. The bolts 28 and 30 are made integral with the damper elements 20 and 22 and are encompassed by eyelets 32 and 34 of the spring 10, which are arranged at the free ends of the spring 10. Accordingly, the damper 14 and the spring 10 are coupled by a positive locking. Moreover, fixing lugs 36 and 38 outwardly project from the eyelets 32 and 34 of the spring 10. These fixing lugs serve as fixing means for fixing the spring system 10 to other components, such as to a stationary component and to a movable component, as it will be explained below with respect to figure 3. The helical spring 12 of the spring system 10 is tensioned in its initial state, whereas the damper is unloaded. As soon as the spring 12 is released from its initial position, it moves due to the spring force F_{F}, whereas its movement is decelerated by the damping force F_{D}. The relationship between the spring force F_{F} and the damping force F_{D} defines the course of movements and the speed of movement of the entire spring system 10.

Figure 3 is a schematic side view of an opening- and closing device 40 according to the present invention for opening and closing an oven door 42. The oven door opening and closing device 40 comprises a hinge 44 with a hinge housing 46, kinematic means 48, a movable element 50 and a spring system 10 as shown in figures 1 and 2.

The kinematic means 48 are inserted in the hinge housing 46 and coupled to the hinge 44 and to the movable element 50 in such a manner, that the pivoting opening and closing movement of the hinge 44 to open and close the door 42 is converted into a predetermined reciprocating opening and closing movement of the movable element 50, which is guided within the hinge housing 46. The kinematic means 48 are not illustrated in detail in figure 3. They are, e.g. of mechanical nature and may comprise a combination of gear and rack, connecting rods, etc., in order to convert the pivotal movement of the hinge 44 into a reciprocating linear movement of the movable element 50. The movable element 50 is formed as a movable bolt. Accordingly, the movable element 50 performs a reciprocating linear movement, when the oven door 42 is opened and closed. One fixing lug of the spring system 10 is fixed to the movable element 50. The other fixing lug of the spring system 10 is held by a bolt 52, which is stationary positioned within the hinge housing 46. Accordingly, the spring 12 of the spring system 10 is lengthened, when the oven door 42 is opened, in order to compensate the weight of the oven door 42, whereas the hydraulic damper 14 counteracts the loads of the spring 12 in order to decelerate the movement.

### List of reference signs

- 10: spring system
- 12: helical spring
- 14: hydraulic damper
- 16: internal space
- 18: longitudinal axis
- 20: damper element
- 22: damper element
- 24: free end
- 26: free end
- 28: bolt
- 30: bolt
- 32: eyelet
- 34: eyelet
- 36: fixing lug
- 38: fixing lug
- 40: opening and closing device
- 42: door
- 44: hinge
- 46: hinge housing
- 48: kinematic means
- 50: movable element
- 52: bolt

## Claims

1. Spring system (10) comprising an elongate spring (12) having a predetermined spring force (F_{F}) and an elongate damper (14) having a predetermined damping force (F_{D}), whereas the damping force (F_{D}) counteracts the spring force (F_{F}) and is smaller than the spring force (F_{F}),
wherein the damper (14) is arranged within the spring (12) or vice versa and
wherein the damper (14) is coupled to the spring (12) in such a manner that the damper (14) and the spring (12) form a single unit one can independently handle, wherein the spring (12) is a helical spring and
the damper (14) is coupled to the spring (12) by a positive locking, **characterized in that** the damper (14) is arranged within the helical spring (12), and the damper (14) comprises bolts (28, 30), which are arranged transversely with respect to a longitudinal axis (18) of the damper (14) and are accommodated within eyelets (32, 34) of the spring and **in that**
the bolts (28, 30) are made integral with the damper (14).

2. Spring system (10) according to claim 1,
**characterized in that**
the damper (14) is a hydraulic damper.

3. Spring system (10) according to one of the forgoing claims,
**characterized in that**
the spring (12) and/or the damper (14) is provided with fixing means (36, 38).

4. Opening- and/or closing device (40) for opening and/or closing doors,
**characterized in that**
the device (40) comprises at least one spring system (10) according to one of the forgoing claims.

## Patentansprüche

1. Federsystem (10), das eine längliche Feder (12) mit einer bestimmten Federkraft (F_{F}) und einen länglichen Dämpfer (14) mit einer bestimmten Dämpfkraft (F_{D}) aufweist, wobei die Dämpfkraft (F_{D}) gegen die Federkraft (F_{F}) wirksam wird und kleiner ist als die Federkraft (F_{F}),
wobei der Dämpfer (14) innerhalb der Feder (12) angeordnet ist oder umgekehrt, und
wobei der Dämpfer (14) an die Feder (12) auf eine Weise gekoppelt ist, dass der Dämpfer (14) und die Feder (12) eine einzelne Einheit bilden, die unabhängig bedient werden kann, wobei die Feder (12) eine Schraubenfeder ist und der Dämpfer (14) mit der Feder (12) formschlüssig gekoppelt ist, **dadurch gekennzeichnet, dass**
der Dämpfer (14) innerhalb der Schraubenfeder (12) angeordnet ist und der Dämpfer (14) Bolzen (28, 30) umfasst, die quer zu einer Längsachse (18) des Dämpfers (14) angeordnet sind und in Ösen (32, 34) der Feder eingebracht sind,
und **dadurch**, dass
die Bolzen (28, 30) integriert in den Dämpfer (14) ausgeführt sind.

2. Federsystem (10) gemäß Anspruch 1,
**dadurch gekennzeichnet, dass**
der Dämpfer (14) ein hydraulischer Dämpfer ist.

3. Federsystem (10) gemäß einem der vorangehenden Ansprüche,
**dadurch gekennzeichnet, dass**
die Feder (12) und/oder der Dämpfer (14) mit Befestigungsmitteln (36, 38) versehen sind.

4. Öffnungs- und/oder Schließvorrichtung (40) zum Öffnen und/oder
Schließen von Türen,
**dadurch gekennzeichnet, dass**
die Vorrichtung (40) wenigstens ein Federsystem (10) gemäß einem der vorangehenden Ansprüche umfasst.

## Revendications

1. Système de ressort (10) comprenant un ressort oblong (12) ayant une force de ressort prédéterminée (F_{F}) et un amortisseur oblong (14) ayant une force d'amortissement prédéterminée (F_{D}), tandis que la force d'amortissement (F_{D}) agit contre la force de ressort (F_{F}) et est plus petite que la force de ressort (F_{F}),
où l'amortisseur (14) est agencé dans le ressort (12) ou vice versa et
où l'amortisseur (14) est couplé au ressort (12) de telle manière que l'amortisseur (14) et le ressort (12) forment une seule unité qu'on peut manipuler indépendamment, où le ressort (12) est un ressort hélicoïdal et l'amortisseur (14) est couplé au ressort (12) par un verrouillage positif, **caractérisé en ce que** l'amortisseur (14) est agencé dans le ressort hélicoïdal (12), et l'amortisseur (14) comprend des boulons (28, 30) qui sont agencés transversalement par rapport à un axe longitudinal (18) de l'amortisseur (14) et sont reçus dans des oeillets (32, 34) du ressort, et **en ce que** les boulons (28, 30) sont réalisés intégralement avec l'amortisseur (14).

2. Système de ressort (10) selon la revendication 1, **caractérisé en ce que** l'amortisseur (14) est un amortisseur hydraulique.

3. Système de ressort (10) selon l'une des revendications précédentes, **caractérisé en ce que** le ressort (12) et/ou l'amortisseur (14) est muni de moyens de fixation (36, 38).

4. Dispositif d'ouverture et/ou de fermeture (40) pour l'ouverture et/ou la fermeture de portes, **caractérisé en ce que** le dispositif (40) comprend au moins un système de ressort (10) selon l'une quelconque des revendications précédentes.
